# EUROPEAN PATENT SPECIFICATION

(11) **EP 3 789 624 B1**
(45) Date of publication and mention of the grant of the patent: **28.06.2023**
(21) Application number: 19195639.0
(22) Date of filing: 05.09.2019
(51) Int. Cl.: F16C 32/04

(54) **MAGNETIC BEARING DEVICE HAVING A TOROIDAL DESIGN**
MAGNETISCHE LAGERVORRICHTUNG MIT EINEM TOROIDALEN DESIGN
PALIER MAGNÉTIQUE DOTÉ D'UNE CONCEPTION TOROÏDALE

(43) Date of publication of application: 10.03.2021
(73) Proprietor: Mecos AG, 8005 Zürich (CH)
(72) Inventor: BÜHLER, Philipp, 8006 Zürich (CH)
(74) Representative: Detken, Andreas

(56) References cited:
- WO-A1-2018/037158
- WO-A1-2018/182905
- JP-A- 2002 257 136
- JP-A- 2009 270 595
- US-A1- 2019 072 130
- US-B1- 7 112 903
- US-B2- 7 557 480
- US-B2- 8 378 543

## Description

### TECHNICAL FIELD

The present invention relates to a magnetic bearing device comprising a stator and a rotor supported in the stator for rotation around a rotation axis.

### PRIOR ART

Active magnetic bearings are often used to support moving parts without physical contact. If the moving part is a rotor supported for rotation around a rotation axis, it is known to control both radial and axial displacements of the rotor by active magnetic bearings.

In a commonly employed design, an active radial magnetic bearing comprises a magnetically soft stator core having structures that extend radially inwards, commonly called "teeth". Each stator tooth forms an air gap with the rotor, which also is magnetically soft. Stator windings are provided on the stator teeth or between adjacent stator teeth. A current in a stator winding causes a magnetic flux through the stator core, the associated stator teeth and the rotor, which gives rise to an attractive reluctance force between the stator and the rotor. The region between adjacent teeth is commonly called a "slot", and therefore this design type is often called a "slotted" design.

This traditional design is not optimally suited for rotors that have small diameter (e.g., a diameter below a few centimeters). With small-diameter rotors, the length of the air gap between the stator teeth and the rotor becomes comparatively large in relation to the rotor diameter, leading to a comparatively high magnetic reluctance. As a consequence, comparatively large windings are required for generating sufficient bearing forces. This adds to both cost and size.

It is therefore desirable to provide a magnetic bearing device for controlling at least radial displacements of a rotor that can be constructed in a compact and cost-efficient manner, making it particularly well-suited for small rotors.

The publication C. Zwyssig et al., "High-Speed Magnetically Levitated Reaction Wheel Demonstrator", Proceedings of the 2014 International Power Electronics Conference - ECCE Asia (IPEC 2014), Hiroshima, Japan, pp. 1707-1714, May 2014, discloses a dual hetero-/homopolar slotless self-bearing motor. In the heteropolar part, the rotor comprises diametrically magnetized permanent magnets. Motor windings and bearing windings are placed in an air gap between the rotor and a slotless stator core. In the homopolar part, the rotor comprises two axially-magnetized permanent magnets with opposite polarities. The corresponding stator portion is ironless. It comprises two axial bearing windings, each axial bearing winding being wound azimuthally around the rotor axis and being placed in a location where it sees mainly a radial magnetic field, and a plurality of radial bearing windings, the radial bearing windings being axially arranged between the axial bearing windings. The turns of the radial bearing windings extend essentially on a cylindrical surface.

The same design is also disclosed in M. Kaufmann et al., "High-Speed Magnetically Levitated Reaction Wheels for Small Satellites", Proceedings of the 23rd International Symposium on Power Electronics, Electrical Drives, Automation and Motion (SPEEDAM 2016), Anacapri, Italy, pp. 28-33, June 2016, and in A. Tüysüz et al., "A 300'000-r/min Magnetically Levitated Reaction Wheel Demonstrator", IEEE Transactions on Industrial Electronics, Vol. 66, No. 8, pp. 6404-6407, August 2019.

This design requires considerable space, and the bearing forces that can be generated in the homopolar part are rather limited.

The publication T. Baumgartner, J. W. Kolar, "Multivariable State Feedback Control of a 500 000-r/min Self-Bearing Permanent-Magnet Motor", IEEE/ASME Transactions on Mechatronics, Vol. 20, No. 3, pp. 1149-1159, June 2015 discloses a self-bearing motor. The rotor comprises three permanent magnets: an axially magnetized permanent magnet arranged between two diametrically magnetized permanent magnets. An axial bearing winding surrounds the axially magnetized permanent magnet, and axial bearing forces are generated by interaction with this magnet. Motor windings and bearing windings are placed in an air gap between the diametrically magnetized permanent magnets and a slotless magnetic stator core. Radial bearing forces are caused by interaction with the diametrically magnetized permanent magnets. Also in this design, the turns of the radial bearing windings extend essentially on a cylindrical surface.

This design is relatively complex.

The publication D. Steinert et al., "Slotless Bearingless Disk Drive for High-Speed and High-Purity Applications", IEEE Transactions on Industrial Electronics, Vol. 61, No. 11, pp. 5974-5986, November 2014 discloses a bearingless motor with toroidally wound windings on a ring-shaped, slotless magnetic stator core. The rotor consists of a heteropolar, diametrically magnetized, ring-shaped magnet. Stability of the rotor against axial and tilt displacements is given by passive reluctance forces, and no axial bearing windings are provided. A bearingless motor with a heteropolar ring-shaped rotor, defining one or two pole pairs, is also disclosed in D. Steinert et al., "Evaluation of One- and Two-Pole-Pair Slotless Bearingless Motors with Toroidal Windings", IEEE Transactions on Industry Applications, Vol. 52, No. 1, pp. 172-180, January/February 2016.

Applicability of this design is limited to extremely short, ring-shaped rotors.

US 2019/0072130 A1 discloses a radial magnetic bearing including an axis, a stator and a rotor. The stator includes at least two stator assemblies axially spaced from one another. Each of the stator assemblies includes a magnetically soft core with several radially projecting teeth. Two respective teeth of the magnetically soft core that are successive in the circumferential direction are connected to each other by way of a connecting section of the core. The connecting sections are wound with coils. A permanent magnet assembly is disposed axially between the two magnetically soft cores and/or in the rotor. The permanent magnet assembly creates a magnetic flow that is completed via the rotor. In the de-energized state, the magnetic flow is distributed evenly across the circumference, so that no net force arises in the radial direction. Energizing the coils creates a magnetic field that affects the magnetic flow of the permanent magnet. The magnetic flow is directed such that the flow density in the air gap between the rotor and the stator is no longer distributed evenly. This creates a net force acting on the rotor in the radial direction. This document discloses a magnetic bearing device according to the preamble of claim 1.

US 7,112,903 B1, US 8,378,543 B2 and WO 2018/182905 A1 each discloses a magnetic bearing arrangement comprising a rotor that includes an axially magnetized permanent magnet and comprising a stator having a closed core with radially projecting teeth. Bearing coils are wound around the teeth.

WO 2018/037158 A1 discloses an axial magnetic bearing comprising a rotor and comprising a stator that includes one or more coils and multiple magnetic core elements supported by a frame structure.

### SUMMARY OF THE INVENTION

It is an object of the present invention to provide a magnetic bearing device for controlling at least radial displacements of a rotor that can be constructed in a compact and cost-efficient manner, making it particularly well-suited for small rotors.

This object is achieved by a magnetic bearing device having the features of claim 1. Further embodiments of the invention are laid down in the dependent claims.

Accordingly, a magnetic bearing device is provided, comprising:
a stator and a rotor supported in the stator for rotation around a rotation axis,
the rotor comprising at least one permanent magnet that is magnetized along the rotation axis,
the stator comprising at least one closed magnetic core that surrounds the rotor and at least one radial bearing winding arranged on the at least one closed magnetic core in a toroidal configuration, the at least one radial bearing winding being arranged to interact with a radial component of a permanent magnetic field generated by the at least one axially magnetized permanent magnet to obtain a radial bearing force when current is supplied to the at least one radial bearing winding.

By providing the at least one radial bearing winding in a toroidal configuration on a closed magnetic core in combination with a rotor comprising an axially magnetized permanent magnet, a very compact design can be achieved, while large radial bearing forces can be obtained.

The core preferably comprises or consists of a magnetically soft material. The closed magnetic core will be generally ring-shaped. The closed magnetic core does not have any teeth that extend inward from a closed ring portion of the core toward the rotor, and accordingly it does not have any voids or "slots" between the teeth. Such a magnetic core can accordingly be considered "slotless".

In particular, the closed magnetic core can have the shape of a toroid. A toroid is a surface of revolution with a hole in the middle, like a doughnut. The axis of revolution passes through the hole and so does not intersect the surface. For example, when a rectangle is rotated around an axis parallel to one of its edges, then a rectangle-section toroid is produced. A closed magnetic core in the shape of a toroid is called a toroidal magnetic core. While it is advantageous if the closed magnetic core has exactly toroidal shape, the closed magnetic core can deviate from an exact toroidal shape and can, for instance, have the shape of a toroidal polyhedron.

In the context of the present disclosure, a winding is to be understood to have "toroidal configuration" if the winding extends around the closed magnetic core, each of its turns passing through its central hole. A winding of toroidal configuration does not need to and generally will not extend along the entire circumference of the closed magnetic core with respect to its axis of revolution. In fact, the winding may extend along only a small fraction of said circumference. In the following, the terms "winding having toroidal configuration" and "toroidal winding" will be used as synonyms.

Preferably at least two radial bearing windings are provided on a common closed magnetic core, each of these windings having a toroidal configuration and being arranged to interact with a permanent magnetic field generated by the at least one axially magnetized permanent magnet. It is then possible to supply currents to the at least two radial bearing windings in such a manner that the magnetic fluxes generated by each of said currents are oriented along different circumferential directions inside the closed magnetic core. This is advantageous for maximizing the obtainable radial forces. In particular, it is advantageous to provide at least one pair of radial bearing windings arranged on diametrically opposite sides of the rotor.

In some embodiments, the magnetic bearing device comprises first and second magnetic guide rings, each of the first and second magnetic guide rings surrounding the rotor, the first magnetic guide ring being arranged on a first axial side of the at least one radial bearing winding, and the second magnetic guide ring being arranged on a second axial side of the at least one radial bearing winding opposite to the first axial side. The first magnetic guide ring can be configured to guide the permanent magnetic field between a first axial end portion of the at least one permanent magnet and a first axial end portion of the closed magnetic core, and the second magnetic guide ring can be configured to guide the permanent magnetic field between a second axial end portion of the at least one permanent magnet and a second axial end portion of the closed magnetic core. Like the closed magnetic core, the magnetic guide rings advantageously comprise or consist of a magnetically soft material. Each magnetic guide ring preferably has toroidal shape, in particular, the shape of a flat circular disk with a central hole. Each magnetic guide ring preferably has an outer diameter that is at least as large as the outer diameter of the closed magnetic core. For constructive reasons, it can be preferable that the outer diameter of the magnetic guide ring is at least as large as the maximum outer diameter of the radial bearing windings. The first and second guide rings are preferably part of the stator.

In some embodiments, the rotor comprises at least one magnetic guide disk arranged axially adjacent to the at least one permanent magnet, the at least one magnetic guide disk being configured to concentrate the permanent magnetic field in a radial gap region between the rotor and the closed magnetic core. Each magnetic guide disk advantageously comprises or consists of a magnetically soft material. The purpose of the at least one magnetic guide disk is the following: By having a toroidal configuration, the at least one radial bearing winding comprises a plurality of axial conductor portions (i.e., conductor portions that extend essentially parallel to the rotation axis or, equivalently, to the central axis of the closed magnetic core, or that extend at least in a direction having a large axial component) arranged in said radial gap region. The at least one magnetic guide disk will then act to concentrate the permanent magnetic field in a region where these inner axial conductor portions are disposed, thus helping to maximize the obtainable radial forces.

In some advantageous embodiments, the rotor comprises first and second permanent magnets that are magnetized along the rotation axis with opposite polarities. In this manner, the permanent magnetic field will have a particularly high radial component around the axial location where the first and second permanent magnets meet, enabling the generation of particularly strong radial bearing forces.

In such embodiments, it is advantageous if the rotor comprises a magnetic guide disk that is arranged axially between the first and second permanent magnets, preferably immediately adjacent to both permanent magnets. The magnetic guide disk will then act to further concentrate the permanent magnetic field in the radial gap between the rotor and the closed magnetic core in a region where the radial component of the permanent magnetic field is already particularly high, thus further aiding in the generation of strong radial bearing forces. Again, the magnetic guide disk preferably comprises or consists of a magnetically soft material.

In some embodiments, the stator comprises first and second closed magnetic cores that surround the rotor at different axial locations along the rotation axis, at least one first radial bearing winding that is arranged in a toroidal configuration around the first closed magnetic core, and at least one second radial bearing winding that is arranged in a toroidal configuration around the second closed magnetic core. Both the first and second radial bearing windings are arranged to interact with the permanent magnetic field generated by the at least one axially magnetized permanent magnet to obtain a radial bearing force when current is supplied to the first and second radial bearing windings. In this case, additional magnetic guide rings at the axial ends of the radial bearing windings can readily be dispensed with, since the closed magnetic cores will generally already guide the permanent magnetic field to a sufficient extent.

This design is particularly advantageous if the at least one axially magnetized permanent magnet has only one single polarity along the rotation axis, i.e., if its polarity does not change along the rotation axis. In particular, the rotor can comprise only a single, axially magnetized permanent magnet.

If the at least one permanent magnet has only a single polarity along the rotation axis, it is particularly advantageous if the rotor comprises first and second magnetic guide disks arranged at axially opposite ends of the at least one permanent magnet. The first magnetic guide disk can then be configured to concentrate the permanent magnetic field in a radial gap region between the rotor and the first closed magnetic core, and the second magnetic guide disk can be configured to concentrate the permanent magnetic field in a radial gap region between the rotor and the second closed magnetic core. Again, these guide disks preferably comprise or consist of a magnetically soft material.

In some embodiments, the magnetic bearing device further comprises at least one axial bearing winding wound azimuthally around the rotor, the at least one axial bearing winding being arranged to interact with the permanent magnetic field generated by the at least one axially magnetized permanent magnet to obtain an axial bearing force when current is supplied to the at least one axial bearing winding. In some embodiments, the magnetic bearing device comprises two axial bearing windings arranged on axially opposite sides of the at least one radial bearing winding. In other embodiments, the magnetic bearing device comprises at least one axial bearing winding that is arranged in a radial gap between the rotor and the closed magnetic core, in particular, between the rotor and the at least one radial bearing winding. It is of course also possible to combine these two possibilities.

In some embodiments, the magnetic bearing device comprises at least one radial displacement sensor for detecting radial displacements of the rotor, and a controller configured to receive signals from the at least one radial displacement sensor and to generate radial control signals for the at least one radial bearing winding so as to manipulate a radial position of the rotor. In particular, the controller can be configured to stabilize the rotor in a desired radial positon.

The magnetic bearing device can further comprise at least one axial displacement sensor for detecting axial displacements of the rotor, and the controller can be further configured to receive signals from the at least one axial displacement sensor and to generate axial control signals for at least one axial bearing winding so as to manipulate an axial position of the rotor, in particular, to stabilize the rotor in a desired axial position.

Generally the magnetic bearing device will comprise more than one radial bearing winding, in particular, two, three, four, six or more radial bearing windings distributed over the circumference of the at least one closed magnetic core. It is then advantageous to connect the radial bearing windings as follows: If the magnetic bearing device comprises at least one pair of radial bearing windings arranged on diametrically opposite sides of the rotor in a toroidal configuration on a common closed magnetic core, it is advantageous to connect the radial bearing windings of the pair in an anti-series or anti-parallel configuration. If the magnetic bearing device comprises at least three radial bearing windings distributed along the circumference of a common closed magnetic core in a toroidal configuration, it is advantageous to connect the radial bearing windings in a star configuration or in a delta configuration. Both possibilities can be combined if at least six radial bearing windings are present, e.g., if three pairs of two diametrically opposed radial bearing windings are present. In this case, it is advantageous to connect the windings of each pair in an anti-series or antiparallel configuration and to connect the pairs in a star or delta configuration.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows, in a perspective view, a first embodiment of a magnetic bearing device;
- Fig. 2: shows, in a perspective view, the magnetic bearing device of the first embodiment without its housing parts;
- Fig. 3: shows the magnetic bearing device of the first embodiment in a central longitudinal section;
- Fig. 4: shows a simplified cross section through the magnetic bearing device of Figures 1 to 3 in plane A-A of Fig. 3;
- Fig. 5: shows, in a central longitudinal section, a second embodiment of a magnetic bearing device;
- Fig. 6: shows, in a central longitudinal section, a third embodiment of a magnetic bearing device;
- Fig. 7: shows, in a side view, a fourth embodiment of a magnetic bearing device;
- Fig. 8: shows the magnetic bearing device of the fourth embodiment in a central longitudinal section;
- Fig. 9: shows, in a side view, a fifth embodiment of a magnetic bearing device;
- Fig. 10: shows the magnetic bearing device of the fifth embodiment in a central longitudinal section;
- Fig. 11: shows a schematic diagram illustrating a radial bearing comprising four toroidal windings;
- Fig. 12: shows a schematic circuit diagram illustrating how the four toroidal windings of the radial bearing in Fig. 11 can be connected;
- Fig. 13: shows a schematic circuit diagram illustrating an amplifier for driving the toroidal windings of the radial bearing in Fig. 11;
- Fig. 14: shows a schematic diagram illustrating a radial bearing comprising six toroidal windings;
- Fig. 15: shows a schematic circuit diagram illustrating a first possibility how the six toroidal windings of the radial bearing in Fig. 14 can be connected;
- Fig. 16: shows a schematic circuit diagram illustrating a second possibility how the six toroidal windings of the radial bearing in Fig. 14 can be connected;
- Fig. 17: shows a schematic circuit diagram illustrating a third possibility how the six toroidal windings of the radial bearing in Fig. 14 can be connected;
- Fig. 18: shows a schematic diagram illustrating a radial bearing comprising three toroidal windings connected in a star configuration; and
- Fig. 19: shows a schematic circuit diagram illustrating an amplifier for driving windings in a three-phase configuration (usable for winding schemes according to Fig. 15, 16, 17 or 18).

### DESCRIPTION OF PREFERRED EMBODIMENTS

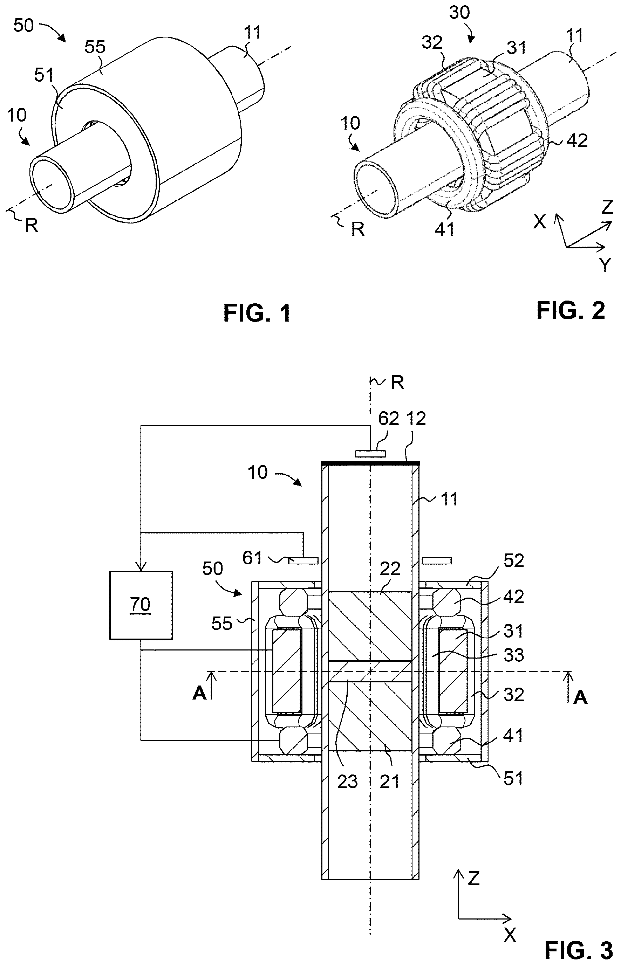

In Figures 1 to 3, a first embodiment of a magnetic bearing device according to the present invention is illustrated. Fig. 1 shows the magnetic bearing device including its housing, while Fig. 2 shows the device without the housing. In Fig. 3, additional components of the magnetic bearing device are illustrated, which are absent from Figures 1 and 2.

A rotor 10 comprises a hollow tube 11 made of a non-magnetic material like austenitic steel, titanium, aluminum or fiber-reinforced plastics. In order to minimize losses by eddy currents, it may be advantageous to manufacture hollow tube 11 from a material having high electrical resistivity. Inside the hollow tube 11, a first permanent magnet 21 and a second permanent magnet 22 are held. Both permanent magnets 21, 22 are axially magnetized. They have opposite polarities. Axially between and immediately adjacent to the permanent magnets 21, 22, a magnetic guide disk 23 is held. The magnetic guide disk 23 is made of a magnetically soft material, i.e., of a ferro- or ferrimagnetic material having high magnetic permeability, low coercivity (e.g., below 100 A/m) and low hysteresis. Suitable magnetically soft materials are well known in the art. Examples include supermalloy, permalloy, electrical steel and so-called soft ferrites.

A stator 30 surrounds the rotor 10. The stator 30 comprises a ring-shaped closed magnetic core 31 made of a magnetically soft material, the magnetic core 31 surrounding the rotor 10. Six radial bearing windings 32 in toroidal configuration are provided on the magnetic core 31. The radial bearing windings 32 are illustrated in Figs. 2 and 3 in a highly schematic manner, only five turns per winding arranged in single layer on the surface of magnetic core 31 being illustrated. In reality, the radial bearing windings can of course have a much higher number of turns, and the turns do not need to be present in a single layer on the surface of the magnetic core 31.

First and second axial bearing windings 41, 42 are provided on both axial sides of the radial bearing windings 32. Each axial bearing winding 41, 42 extends azimuthally around the rotor 10 and is arranged coaxially with the ring-shaped magnetic core 31. Also the axial bearing windings 41, 42 are shown in a highly simplified manner only. In particular, it is to be understood that each of the axial bearing windings 41, 42 can have an arbitrary number of turns.

Axially adjacent to each axial bearing winding 41, 42, on the axial side that faces away from the radial bearing windings 32, a magnetic guide ring 51, 52 made of a magnetically soft material is arranged. Each magnetic guide ring 51, 52 extends around the rotor 10, having the shape of a flat disk with a central hole through which the rotor 10 passes. A cylindrical magnetic guide sleeve 55 made of a magnetically soft material surrounds the radial bearing windings 32, the axial bearing windings 41, 42, and the magnetic guide rings 51, 52, touching the magnetic guide rings 51, 52 at their respective outer circumference. The magnetic guide rings 51, 52 and the magnetic guide sleeve 55 together form a housing 50 of the magnetic bearing device.

A plurality of radial displacement sensors 61 is disposed at regular intervals around the circumference of the rotor in a region outside the housing 50. The hollow tube 11 of the rotor 10 is closed at one end with an end plate 12. An axial displacement sensor 62 is arranged on the rotation axis R, facing the target plate 12. The radial and axial displacement sensors 61, 62 can be, for instance, eddy current sensors as they are well known in the art. Electrically conducting targets for the displacement sensors can be provided on the outer circumference of hollow tube 11 and on end plate 12.

A controller 70 receives displacement signals from the radial and axial displacement sensors 61, 62 and derives control signals for the radial and axial bearing windings 32, 41, 42, based on the displacement signals. The controller 70 further comprises power amplifiers for driving the radial and axial bearing windings 32, 41, 42.

The magnetic bearing device is operated to maintain rotor 10 in a desired position without contact to the stator. In the present example, the desired position is the position shown in Fig. 3. In this position, the rotation axis R of the rotor 10 coincides with a central bearing axis defined by the common central axis of the ring-shaped magnetic core 31 and the axial bearing windings 41, 42, and the magnetic guide disk 23 is axially centered between the first and second axial bearing windings 41, 42. Radial displacements of the rotor 10 from the desired position are detected by the radial displacement sensors 61, while axial displacements are detected by the axial displacement sensors 62. Based on the signals from the radial and axial displacement sensors 61, 62, the controller derives control signals that cause the power amplifiers to supply currents to the radial and axial bearing windings 32, 41, 42 in order to minimize radial and axial displacements or to minimize target values that have been derived from the radial and axial displacements.

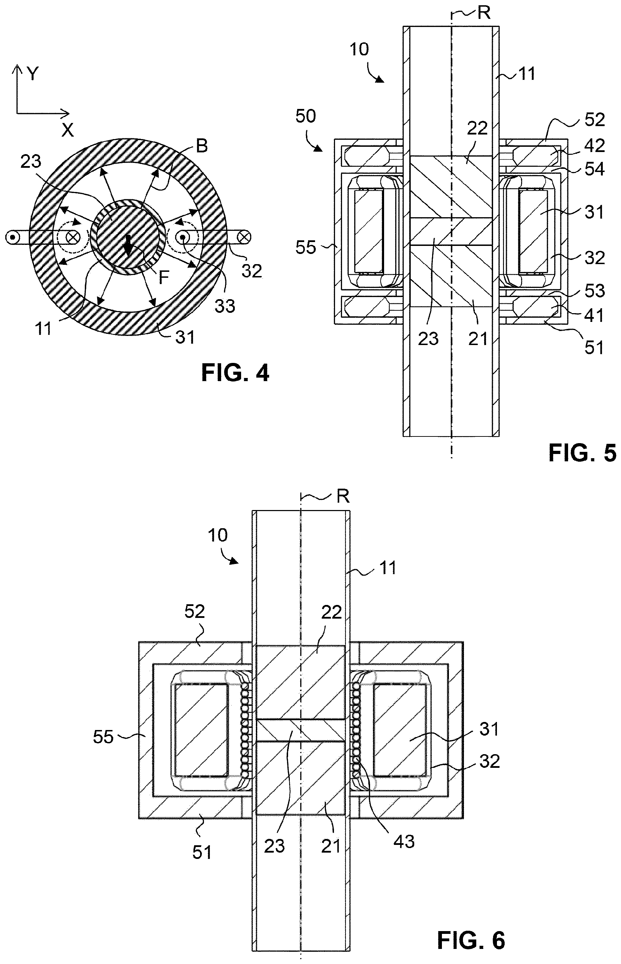

The magnetic field distribution inside the magnetic bearing device will now be explained with reference to Fig. 4, which shows a simplified cross section through the magnetic bearing device of Figures 1 to 3 in plane A-A. It should be noted that Fig. 4 is much simplified and not to scale. Only the magnetic guide disk 23 inside rotor tube 11, the ring-shaped magnetic core 31, and one turn each of two windings 32 on diametrically opposite sides of the rotor along the X axis are shown.

The oppositely magnetized permanent magnets 21, 22 generate a homopolar permanent magnetic field, i.e., a magnetic field that is rotationally symmetric around the rotation axis R assuming ideal isotropic conditions in the permanent magnets 21, 22 and a fully rotationally symmetric rotor 10 and stator 30. The magnetic field gives rise to a magnetic flux. The magnetic flux is concentrated and deflected from the axial into the radial direction by magnetic guide disk 23. The magnetic flux exits magnetic guide disk 23 essentially along the radial direction and crosses the radial gap between the rotor 10 and the ring-shaped magnetic core 31. In this region, i.e., on the inside of ring-shaped magnetic core 31, the flux density B has a large radial component. The flux then enters the magnetic core 31 and is deflected inside the magnetic core 31 essentially into opposite axial directions. Near the axial ends of magnetic core 31, the magnetic flux exits magnetic core 31 and returns into the permanent magnets 21, 22, passing through the magnetic guide rings 51, 52. Together with the cylindrical guide sleeve 55, they essentially confine the magnetic field to the inside of housing 50.

Radial bearing forces are generated as follows. As apparent from Figures 3 and 4, each turn of each radial bearing winding 32 comprises an inner axial conductor portion 33 that extends on the inside of the ring-shaped magnetic core 31 along an essentially axial direction. This inner axial conductor portion 33 is exposed to the radial magnetic flux in the radial gap between the rotor 10 and the ring-shaped magnetic core 31. When an electric current flows through the inner axial conductor portion 33, the current locally modifies the magnetic flux distribution, as illustrated in Fig. 4 by the dotted circles. This will cause a force upon the rotor. If electric currents of identical magnitude, but opposite directions flow through two such inner axial conductor portions 33 on diametrically opposite sides of the rotor 10, a net radial force F between the rotor and the stator will result. Accordingly, e.g. for generating a net radial force along the Y direction, currents of identical magnitude, but opposite directions can be supplied to radial bearing windings 32 on diametrically opposite sides of the rotor 10 with respect to the X direction. It will be readily apparent to a person skilled in the art that in the same spirit a net radial force along any arbitrary radial direction can be generated by supplying suitable currents to the radial bearing windings 32. It should be noted that the return current in each turn of the radial bearing windings 32, which flows on the outside of the ring-shaped core 31, gives rise to an oppositely oriented force, which however acts between the housing 50 and the stator 30 and thus does not result in a force on the rotor.

Axial bearing forces primarily result from the interaction of currents in the axial bearing windings 41, 42 with the radial component of the magnetic flux density at the locations of these windings. A net axial bearing force can be readily generated by supplying currents of identical magnitude and identical directions to axial bearing windings 41, 42.

Numerical simulations have shown that the following relative proportions between the various parts of the magnetic bearing device are advantageous:
- The permanent magnets 21, 22 and the magnetic guide disk 23 should together have an axial length along the rotation axis R that at least corresponds to the axial length of the magnetic core 31, preferably at least to the axial length of the radial bearing windings 32. On the other hand, this axial length should preferably not exceed the distance between the outer axial end faces of the magnetic guide rings 51, 52 so as to confine the magnetic flux essentially to the volume delimited by housing 50.
- The magnetic guide disk 23 should have a thickness as measured along the axial direction that is sufficiently large to avoid magnetic saturation under all operating conditions. On the other hand, its axial thickness should preferably be considerably smaller than the axial length of the magnetic core 31. Preferably the axial thickness of the magnetic guide disk 23 is at most 50% of the axial length of the magnetic core 31.
- The magnetic guide rings 51, 52 can have a much smaller thickness as measured along the axial direction because saturation of these rings would not be detrimental to operation of the device. For instance, each magnetic guide ring 51, 52 can be made of a simple disk of relatively thin (below 2 mm) sheet steel through which a central hole has been punched.
- The outer diameter of the magnetic guide rings 51, 52 should be at least as large as the outer diameter of the axial bearing coils 41, 42 to reasonably confine the magnetic field generated by these coils. Independently of this requirement, the outer diameter of the magnetic guide rings 51, 52 should also be at least as large as the outer diameter of the ring-shaped magnetic core 31 and preferably at least as large as the outer diameter of the radial bearing coils 32 in order to ease mechanical assembly.
- The magnetic guide sleeve 55 is not critical and can be left away. Its thickness as measured along the radial direction can be small since operation close to magnetic saturation of the guide sleeve would not be detrimental to operation of the device. For instance, the magnetic guide sleeve 55 can be made of a piece of relatively thin (below 2 mm) simple sheet steel.

These dimensional considerations are not only applicable to the first embodiment illustrated in Figures 1 to 3, but *mutatis mutandis* also to the second to fourth embodiments described below and illustrated in Figures 5 to 8.

A second embodiment of a magnetic bearing device is illustrated in Fig. 5. Parts having the same functionality as in the first embodiment are provided with the same reference signs as in Figures 1 to 4. In contrast to the first embodiment, two additional magnetic guide rings 53, 54 are provided axially between the radial bearing windings 32 and each of the axial bearing windings 41, 42. In this manner, each of the axial bearing windings 41, 42 is axially sandwiched between two magnetic guide rings, which in turn are magnetically connected at their outer circumference by the magnetic guide sleeve 55. The additional magnetic guide rings 53, 54 have the following effect: Magnetic flux of the permanent magnetic field is distributed over the various magnetic guide rings 51, 52, 53, and 54. The distribution of the flux over the magnetic guide rings is modified by currents in the axial bearing windings 41, 42, thus creating additional reluctance forces having an axial component.

A third embodiment of a magnetic bearing device is illustrated in Fig. 6. Again, parts having the same functionality as in the first and second embodiments are provided with the same reference signs as in Figures 1 to 5. In contrast to the first and second embodiments, a single, azimuthally wound, cylindrical axial bearing winding 43 is provided in the radial gap between the rotor 10 and the radial bearing windings 32. In Fig. 6, the axial bearing winding 43 is illustrated in a highly schematic manner as being a solenoid having a small number of turns in a single cylindrical layer. However, it is to be understood that axial bearing winding 43 may have an arbitrary number of turns, which may be arranged in more than one cylindrical layer. The axial bearing winding 43 interacts mainly with the radial magnetic field components between magnetic guide disk 23 and magnetic core 31.

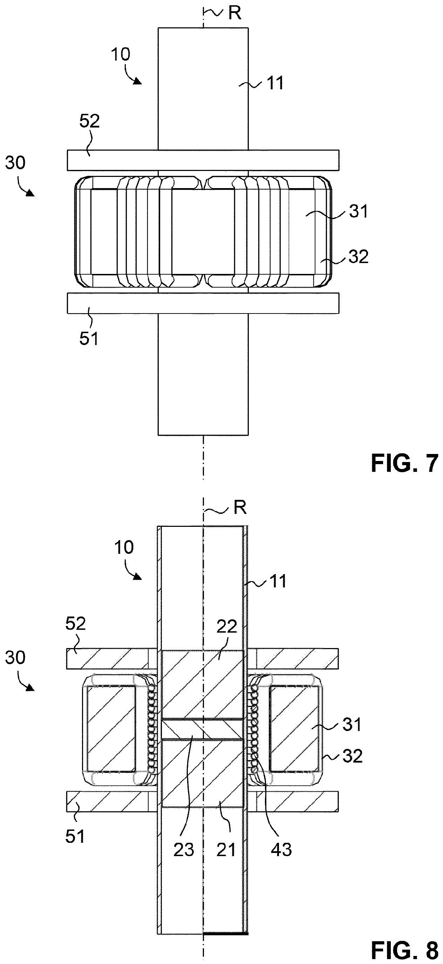

A fourth embodiment of a magnetic bearing device is illustrated in Figures 7 and 8. This embodiment is identical to the third embodiment in Fig. 6, except that the magnetic guide sleeve 55 has been left away. The magnetic guide sleeve 55 can readily be left away because magnetic stray fields will generally be small due to the presence of the magnetic core 31 and the magnetic guide disks 51, 52, and due to the oppositely magnetized permanent magnets 21, 22 and the mirror-symmetric configuration of the stator 30 with respect to a central plane perpendicular to the rotation axis R. By leaving away magnetic guide sleeve 55, construction of the magnetic bearing device can be additionally simplified, and cooling can be improved.

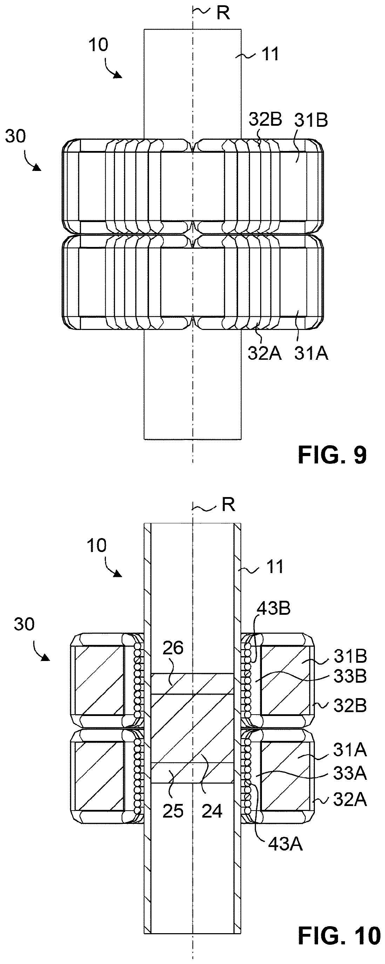

A fifth embodiment of a magnetic bearing device is illustrated in Figures 9 and 10. In this embodiment, two ring-shaped magnetic cores 31A, 31B are present, and a plurality of radial magnetic bearing windings 32A, 32B in toroidal configuration are provided on each of the ring-shaped magnetic cores 31A, 31B. Two azimuthally wound, cylindrical axial bearing windings 43A, 43B are provided, each of these axial bearing windings being arranged in the radial gap between the rotor 10 and one set of radial bearing windings 32A, 32B, respectively. Only a single permanent magnet 24 is provided. The permanent magnet 24 is magnetized along the rotation axis R. On each axial end of the permanent magnet 24, an optional magnetic guide disk 25, 26 is provided.

Radial forces are generated in a similar manner as described above for the first embodiment. For instance, radial bearing windings 32A, 32B arranged on the same ring-shaped magnetic core 31A, 31B, but on diametrically opposite radial sides of the rotor 10 are operated with currents that have the same magnitude, but opposite directions, as in the first embodiment. Likewise, radial bearing windings 32A, 32B arranged on the same radial side of the rotor, but on different ring-shaped magnetic cores 31A, 31B are operated with currents that have the same magnitude, but opposite directions.

It should be noted that the return current in each turn of the radial bearing windings 32A, 32B, which flows on the outside of the ring-shaped cores 31A, 31B, gives rise to an oppositely oriented force, which however acts between the cores 31A and 31B, thus does not result in a force on the rotor.

Also axial forces are generated in a similar manner as described above for the first embodiment, except that currents are supplied to the axial bearing windings 43A, 43B with equal magnitude, but opposite directions.

In a variant, the axial bearing windings can also be provided axially adjacent to the radial bearing windings, as in the first embodiment.

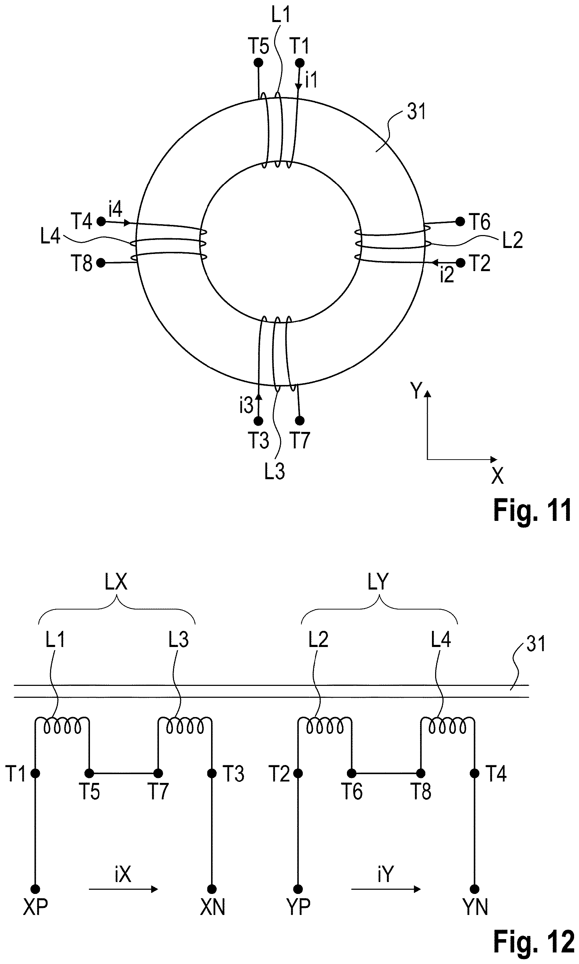

Possible arrangements of toroidal bearing windings on a ring-shaped magnetic core and possible connections between the toroidal bearing windings will now be explained with reference to Figures 11 to 19.

Fig. 11 illustrates, in a highly schematic manner, an arrangement of four toroidal bearing windings L1, L2, L3, L4 arranged on a common ring-shaped magnetic core 31. The terminals of the first bearing winding L1 are designated as T1 and T5; the terminals of the second bearing winding L2 are designated as T2 and T6; the terminals of the third bearing winding L3 are designated as T3 and T7; and the terminals of the fourth bearing winding L4 are designated as T4 and T8. Toroidal bearing windings L1 and L3 are arranged on diametrically opposite sides of the rotor along the Y direction, while toroidal bearing windings L2 and L4 are arranged on diametrically opposite sides of the rotor along the X direction. Bearing winding L1 is supplied with a current i1, bearing winding L2 with a current i2, bearing winding L3 with a current i3, and bearing winding L4 with a current i4.

As explained above, in order to create radial bearing forces along the X direction, bearing windings L1 and L3 should be supplied with currents of equal magnitude, but opposite directions: i1 + i3 = 0. Likewise, in order to create radial bearing forces along the Y direction, bearing windings L2 and L4 should be supplied with currents of equal magnitude, but opposite directions: i2 + i4 = 0.

These requirements can be readily fulfilled by connecting the toroidal bearing windings on diametrically opposite sides of the rotor either in anti-series or anti-parallel configuration. Such a configuration at the same time ensures that the integral of the flux density inside the ring-shaped magnetic core along the circumferential direction is always zero, i.e., there is no net flux along the ring-shaped magnetic core. Such a net flux would be undesirable because it would contribute to magnetic saturation of the ring-shaped core without contributing to the radial bearing forces.

A connection in anti-series configuration is illustrated in Fig. 12. Bearing windings L1 and L3 are connected in an anti-series configuration to form a winding pair LX, having terminals XP and XN. The current flowing through this winding pair is designated as iX, where iX = i1 = -i3. Likewise, bearing windings L2 and L4 are connected in an anti-series configuration to form a winding pair LY, having terminals YP and YN, and the current supplied to this pair is designated as iY, where iY = i2 = -i4.

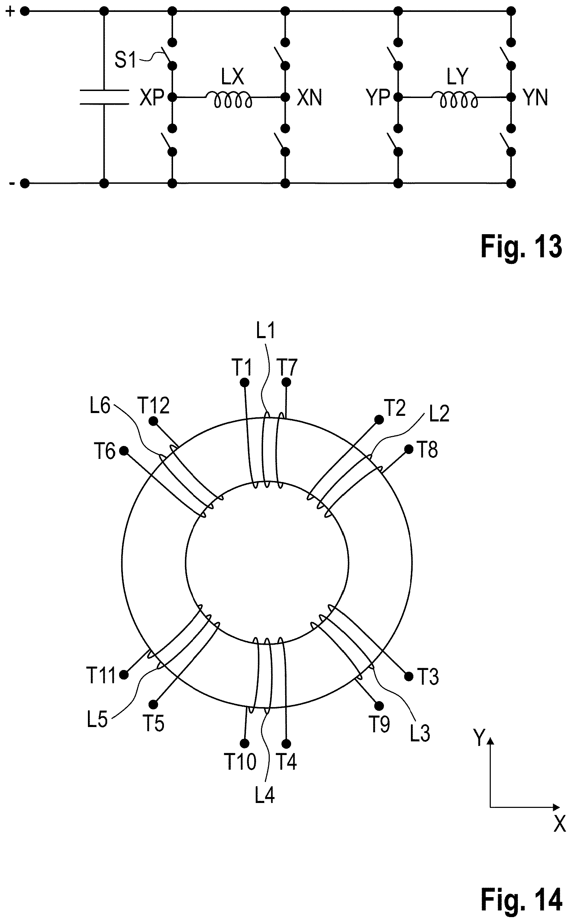

Fig. 13 illustrates, in a highly schematic manner, an amplifier arrangement for driving the winding pairs LX and LY. The winding pair LX is connected in a first H-bridge configuration with four semiconductor switches S1, while the winding pair LY is connected in a second H-bridge configuration.

The concept of connecting pairs of toroidal bearing windings on diametrically opposite sides of the rotor in anti-series or anti-parallel configuration can be readily generalized to situations with different numbers of toroidal bearing windings. Fig. 14 illustrates, in a highly schematic manner, an arrangement of six toroidal bearing windings L1, L2, L3, L4, L5, and L6 on a common ring-shaped magnetic core. The terminals of the first bearing winding L1 are designated as T1 and T7; the terminals of the second bearing winding L2 are designated as T2 and T8; the terminals of the third bearing winding L3 are designated as T3 and T9; the terminals of the fourth bearing winding L4 are designated as T4 and T10; the terminals of the fifth bearing winding L5 are designated as T5 and T11; and the terminals of the sixth bearing winding L6 are designated as T6 and T12.

In order to create radial bearing forces along the X direction, currents of equal magnitude, but opposite directions can be supplied to bearing windings L1 and L4. However, also currents of equal magnitude and equal direction supplied to bearing windings L2 and L6 and currents of the same magnitude, but the opposite direction supplied to bearing windings L3 and L5 will give rise to a net bearing force along the X direction. In order to create radial bearing forces along the Y direction, currents of equal magnitude and equal direction are supplied to bearing windings L2 and L3, while currents of equal magnitude and the opposite direction are supplied to bearing windings L5 and L6. In the same spirit, radial bearing forces can be created along any arbitrary lateral direction in the XY plane

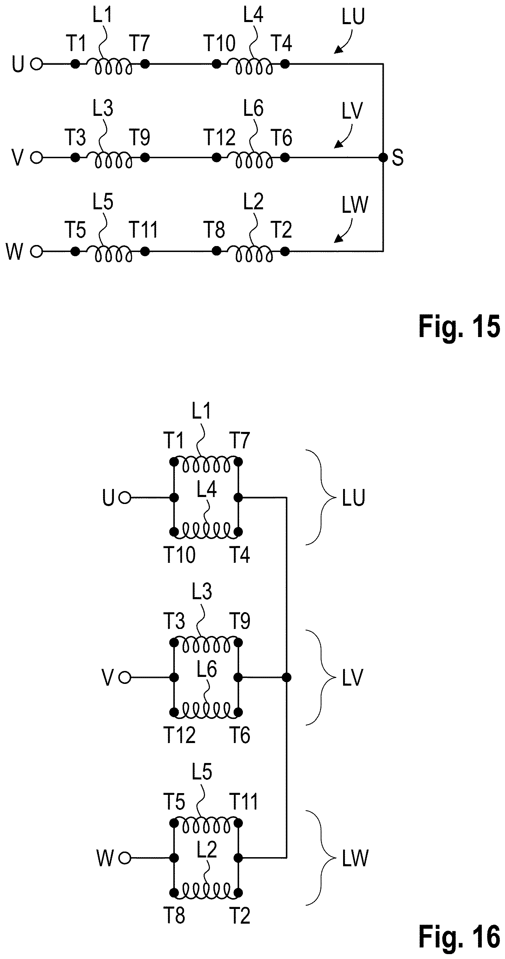

A convenient way of connecting bearing windings L1 to L6 is illustrated in Fig. 15. Pairs of bearing windings arranged on diametrically opposite sides of the rotor are connected in an anti-series configuration. The three resulting pairs LU, LV, and LW are connected in a star configuration with a common star point S. The bearing coils can thus be driven by a three-phase current with phases U, V, W in a similar manner as a three-phase motor whose motor windings are connected in a star configuration. The corresponding transformations of orthogonal X and Y control signals into three-phase control signals for the phases U, V and W are well known in the art (Clarke transform, see, e.g., https://wiki.openelectrical.org/index.php?title=Clarke_Transform, retrieved on September 5, 2019). The star configuration at the same time ensures that the sum of the currents through pairs LU, LV, LW is always zero. This is advantageous because a non-zero sum of these currents would not give rise to any radial force and would only contribute to magnetic saturation of the ring-shaped core.

Fig. 16 shows an alternative arrangement in which the two windings of each pair are connected in an antiparallel configuration, while the pairs are still connected in a star configuration with common star point S.

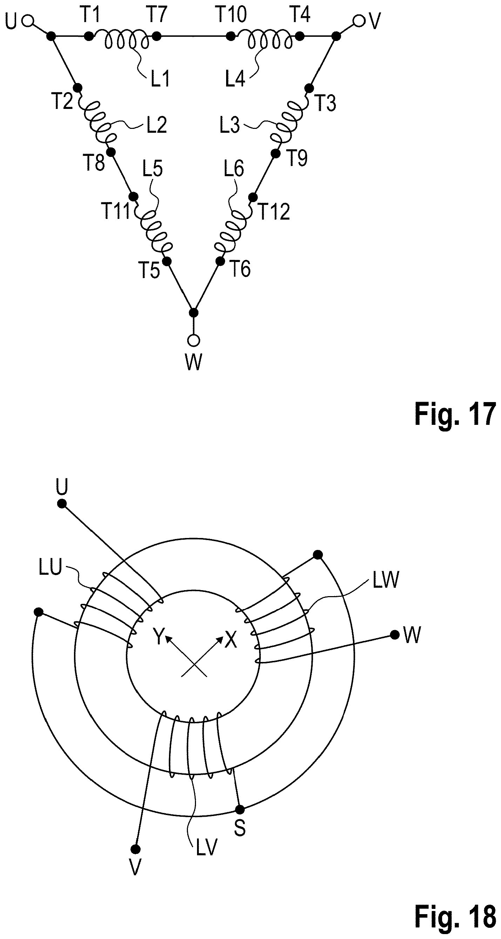

As illustrated in Fig. 17, instead of connecting the pairs in a star configuration, the pairs can also be connected in a delta configuration.

Fig. 18 illustrates an arrangement of only three radial bearing windings LU, LV and LW on a common ring-shaped magnetic core. As in the previous examples, the windings are connected in a star configuration with star point S and can be driven by a three-phase current with phases U, V, W.

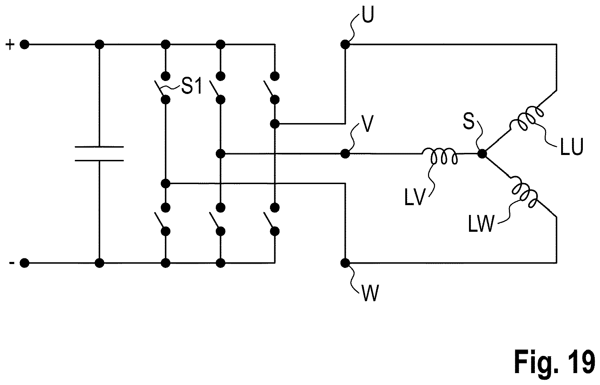

Fig. 19 illustrates a possible amplifier arrangement for driving winding arrangements in a three-phase configuration. As in a three-phase motor, phase U is driven by a first half-bridge circuit, phase V is driven by a second half-bridge circuit, and phase W is driven by a third half-bridge circuit. This amplifier arrangement can be used for any of the configurations of Figs. 15 to 18.

From the above description it will be readily apparent to a person skilled in the art that many modifications are possible within the scope of the appended claims. In particular, it is possible to employ other numbers of radial bearing windings than in the above examples. Instead of mounting the permanent magnet(s) and the magnetic guide disk(s) in a hollow tube, it is also possible to mount these elements on a common central rod. The magnetic guide sleeve can be left away in any of the present examples. The radial and axial displacement sensors can be configured differently than described and can be located in different positions than shown.

### List of Reference Signs

10 - rotor
11 - hollow tube
12 - end plate
21, 22, 24 - permanent magnet
23, 25, 26 - magnetic guide disk
30 - stator
31, 31A, 31B - ring-shaped core
32, 32A, 32B - radial bearing winding
33 - inner axial conductor portion
41, 42, 43, 43A, 43B - axial bearing winding
50 - housing
51, 52, 53, 54 - magnetic guide ring
55 - magnetic guide sleeve
61 - radial displacement sensor
62 - axial displacement sensor
70 - controller
A-A - sectional plane
B - magnetic flux density
F - radial force
i1, i2, i3, i4, iX, iY - current
L1, L2, L3, L4, L5, L6 - radial bearing winding
LU, LV, LW - winding pair or single radial bearing winding
LX, LY - winding pair
S - star point
S1 - semiconductor switch
T1, T2, T3, T4, T5, T6, T7, T8, T9, T10, T11, T12 - terminal
R - rotation axis
U, V, W - phases
X, Y, Z - directions
XP, XN, YP, YN - terminal

## Claims

1. A magnetic bearing device comprising:
a stator (30); and
a rotor (10) supported in the stator (30) for rotation around a rotation axis (R), the rotor (10) comprising at least one permanent magnet (21, 22; 24) that is magnetized along the rotation axis (R), and
the stator comprising at least one closed magnetic core (31; 31A, 31B) that surrounds the rotor (10) and at least one radial bearing winding (32; 32A, 32B) arranged on the at least one closed magnetic core (31; 31A, 31B) in a toroidal configuration, each radial bearing winding (32; 32A, 32B) extending around one closed magnetic core (31; 31A, 31B), each of its turns passing through a central hole of the respective closed magnetic core (31; 31A, 31B),
wherein the at least one radial bearing winding (32; 32A, 32B) is arranged to interact with a radial component of a permanent magnetic field generated by the at least one permanent magnet (21, 22; 24) to obtain a radial bearing force when current is supplied to the at least one radial bearing winding (32; 32A, 32B),
**characterized in that** the at least one closed magnetic core (31; 31A, 31B) does not have any inwardly extending teeth.

2. The magnetic bearing device of claim 1, further comprising first and second magnetic guide rings (51, 52), each of the first and second magnetic guide rings (51, 52) surrounding the rotor (10), the first magnetic guide ring (51) being arranged on a first axial side of the at least one radial bearing winding (32; 32A, 32B), and the second magnetic guide ring (52) being arranged on a second axial side of the at least one radial bearing winding (32; 32A, 32B) opposite to the first axial side, the first magnetic guide ring (51) being configured to guide the permanent magnetic field between a first axial end portion of the at least one permanent magnet (21, 22; 24) and a first axial end portion of the closed magnetic core (31; 31A, 31B), and the second magnetic guide ring (52) being configured to guide the permanent magnetic field between a second axial end portion of the at least one permanent magnet (21, 22; 24) and a second axial end portion of the closed magnetic core (31; 31A, 31B).

3. The magnetic bearing device of any one of the preceding claims, wherein the rotor (10) comprises at least one magnetic guide disk (23; 25, 26) arranged axially adjacent to the at least one permanent magnet (21, 22; 24), the at least one magnetic guide disk (23; 25, 26) being configured to concentrate and deflect a magnetic flux that is caused by the permanent magnetic field from the axial into the radial direction and to concentrate the permanent magnetic field in a radial gap region between the rotor (10) and the closed magnetic core (31; 31A, 31B).

4. The magnetic bearing device of any one of the preceding claims, wherein the rotor comprises first and second permanent magnets (21, 22) that are magnetized along the rotation axis (R) with opposite polarities.

5. The magnetic bearing device of claim 4, wherein the rotor comprises a magnetic guide disk (23) arranged axially between the first and second permanent magnets (21, 22), the magnetic guide disk (23) being configured to concentrate the permanent magnetic field in a radial gap region between the rotor (10) and the closed magnetic core (31; 31A, 31B).

6. The magnetic bearing device of any one claims 1 to 3,
wherein the stator (30) comprises first and second closed magnetic cores (31A, 31B) that surround the rotor (10) at different axial locations along the rotation axis (R),
wherein the stator (30) comprises at least one first radial bearing winding (32A) that arranged in a toroidal configuration around the first closed magnetic core (31A) and at least one second radial bearing winding (32B) that is arranged in a toroidal configuration around the second closed magnetic core (31B),
wherein the first and second radial bearing windings (32A, 32B) are arranged to interact with the permanent magnetic field generated by the at least one permanent magnet (24) to obtain a radial bearing force when current is supplied to the first and second radial bearing windings (32A, 32B).

7. The magnetic bearing device of claim 6, wherein the at least one permanent magnet (24) has one single polarity along the rotation axis (R).

8. The magnetic bearing device of claim 7, wherein the rotor comprises first and second magnetic guide disks (25, 26) arranged at axially opposite ends of the at least one permanent magnet (24), the first magnetic guide disk (25) being configured to concentrate the permanent magnetic field in a radial gap region between the rotor (10) and the first closed magnetic core (31A), and the second magnetic guide disk (26) being configured to concentrate the permanent magnetic field in a radial gap region between the rotor (10) and the second closed magnetic core (31B).

9. The magnetic bearing device of any one of the preceding claims, further comprising at least one axial bearing winding (41, 42; 43) wound azimuthally around the rotor (10), the at least one axial bearing winding (41, 42; 43; 43A, 43B) being arranged to interact with the permanent magnetic field generated by the at least one permanent magnet (21, 22; 24) to obtain an axial bearing force when current is supplied to the at least one axial bearing winding (41, 42; 43; 43A, 43B).

10. The magnetic bearing device of claim 9, comprising two axial bearing windings (41, 42) arranged on axially opposite sides of the at least one radial bearing winding (32; 32A, 32B).

11. The magnetic bearing device of claim 9 or 10, comprising at least one axial bearing winding (43; 43A, 43B) that is arranged in a radial gap between the rotor (10) and the closed magnetic core (31; 31A, 31B), in particular, between the rotor (10) and the at least one radial bearing winding (32; 32A, 32B).

12. The magnetic bearing device according to any one of the preceding claims, further comprising:
at least one radial displacement sensor (61) for detecting radial displacements of the rotor (10); and
a controller (70) configured to receive signals from the at least one radial displacement sensor (61) and to generate radial control signals for the at least one radial bearing winding (32; 32A, 32B) so as to manipulate a radial position of the rotor (10).

13. The magnetic bearing device according claim 12, further comprising:
at least one axial displacement sensor (62) for detecting axial displacements of the rotor (10),
wherein the controller (70) is further configured to receive signals from the at least one axial displacement sensor (62) and to generate axial control signals for at least one axial bearing winding (41, 42; 43; 43A, 43B) so as to manipulate an axial position of the rotor (10).

14. The magnetic bearing device according to any one of the preceding claims,
comprising at least one pair of radial bearing windings (32; 32A, 32B) arranged on diametrically opposite sides of the rotor (10) in a toroidal configuration on a common closed magnetic core (31; 31A, 31B) and connected in an anti-series or anti-parallel configuration, and/or
comprising at least three radial bearing windings (32; 32A, 32B) distributed on a common closed magnetic core (31; 31A, 31B) in a toroidal configuration and connected in a star configuration or in a delta configuration.

## Patentansprüche

1. Magnetische Lagervorrichtung, umfassend:
einen Stator (30); und
einen Rotor (10), der in dem Stator (30) zur Drehung um eine Drehachse (R) gelagert ist, wobei der Rotor (10) mindestens einen Permanentmagneten (21, 22; 24) umfasst, der entlang der Drehachse (R) magnetisiert ist, und
der Stator mindestens einen geschlossenen Magnetkern (31; 31A, 31B), der den Rotor (10) umgibt, und mindestens eine Radiallagerwicklung (32; 32A, 32B) umfasst, die auf dem mindestens einen geschlossenen Magnetkern (31; 31A, 31B) in einer toroidalen Konfiguration angeordnet ist, wobei sich jede Radiallagerwicklung (32; 32A, 32B) um einen geschlossenen Magnetkern (31; 31A, 31B) herum erstreckt, wobei jede ihrer Windungen durch ein zentrales Loch des jeweiligen geschlossenen Magnetkerns (31; 31A, 31B) verläuft,
wobei die mindestens eine Radiallagerwicklung (32; 32A, 32B) so angeordnet ist, dass sie mit einer radialen Komponente eines Permanentmagnetfeldes, das von dem mindestens einen Permanentmagneten (21, 22; 24) erzeugt wird, zusammenwirkt, um eine Radiallagerkraft zu erhalten, wenn die mindestens eine Radiallagerwicklung (32; 32A, 32B) mit Strom versorgt wird,
**dadurch gekennzeichnet, dass** der mindestens eine geschlossene Magnetkern (31; 31A, 31B) keine nach innen gerichteten Zähne aufweist.

2. Magnetische Lagervorrichtung nach Anspruch 1, ferner umfassend erste und zweite magnetische Führungsringe (51, 52), wobei jeder der ersten und zweiten magnetischen Führungsringe (51, 52) den Rotor (10) umgibt, wobei der erste magnetische Führungsring (51) auf einer ersten axialen Seite der mindestens einen Radiallagerwicklung (32; 32A, 32B) angeordnet ist, und der zweite magnetische Führungsring (52) auf einer zweiten axialen Seite der mindestens einen Radiallagerwicklung (32; 32A, 32B) gegenüber der ersten axialen Seite angeordnet ist, wobei der erste magnetische Führungsring (51) dazu ausgebildet ist, das permanente Magnetfeld zwischen einem ersten axialen Endabschnitt des mindestens einen Permanentmagneten (21, 22; 24) und einem ersten axialen Endabschnitt des geschlossenen Magnetkerns (31; 31A, 31B) zu führen, und der zweite magnetische Führungsring (52) dazu ausgebildet ist, das permanente Magnetfeld zwischen einem zweiten axialen Endabschnitt des mindestens einen Permanentmagneten (21, 22; 24) und einem zweiten axialen Endabschnitt des geschlossenen Magnetkerns (31; 31A, 31B) zu führen.

3. Magnetische Lagervorrichtung nach einem der vorhergehenden Ansprüche, wobei der Rotor (10) mindestens eine magnetische Führungsscheibe (23; 25, 26) umfasst, die axial neben dem mindestens einen Permanentmagneten (21, 22; 24) angeordnet ist, wobei die mindestens eine magnetische Führungsscheibe (23; 25, 26) dazu ausgebildet ist, einen magnetischen Fluss, der durch das Permanentmagnetfeld verursacht wird, von der axialen in die radiale Richtung zu konzentrieren und abzulenken und das Permanentmagnetfeld in einem radialen Spaltbereich zwischen dem Rotor (10) und dem geschlossenen Magnetkern (31; 31A, 31B) zu konzentrieren.

4. Magnetische Lagervorrichtung nach einem der vorhergehenden Ansprüche, wobei der Rotor einen ersten und einen zweiten Permanentmagneten (21, 22) aufweist, die entlang der Drehachse (R) mit entgegengesetzten Polaritäten magnetisiert sind.

5. Magnetische Lagervorrichtung nach Anspruch 4, wobei der Rotor eine magnetische Führungsscheibe (23) umfasst, die axial zwischen dem ersten und zweiten Permanentmagneten (21, 22) angeordnet ist, wobei die magnetische Führungsscheibe (23) dazu ausgebildet ist, das Permanentmagnetfeld in einem radialen Spaltbereich zwischen dem Rotor (10) und dem geschlossenen Magnetkern (31; 31A, 31B) zu konzentrieren.

6. Magnetische Lagervorrichtung nach einem der Ansprüche 1 bis 3,
wobei der Stator (30) einen ersten und einen zweiten geschlossenen Magnetkern (31A, 31B) umfasst, die den Rotor (10) an verschiedenen axialen Stellen entlang der Drehachse (R) umgeben,
wobei der Stator (30) mindestens eine erste Radiallagerwicklung (32A) umfasst, die in einer toroidalen Konfiguration um den ersten geschlossenen Magnetkern (31A) angeordnet ist, und mindestens eine zweite Radiallagerwicklung (32B), die in einer toroidalen Konfiguration um den zweiten geschlossenen Magnetkern (31B) angeordnet ist,
wobei die erste und die zweite Radiallagerwicklung (32A, 32B) so angeordnet sind, dass sie mit dem von dem mindestens einen Permanentmagneten (24) erzeugten Permanentmagnetfeld zusammenwirken, um eine Radiallagerkraft zu erhalten, wenn die erste und die zweite Radiallagerwicklung (32A, 32B) mit Strom versorgt werden.

7. Magnetische Lagervorrichtung nach Anspruch 6, wobei der mindestens eine Permanentmagnet (24) eine einzige Polarität entlang der Drehachse (R) aufweist.

8. Magnetische Lagervorrichtung nach Anspruch 7, wobei der Rotor erste und zweite magnetische Führungsscheiben (25, 26) umfasst, die an axial gegenüberliegenden Enden des mindestens einen Permanentmagneten (24) angeordnet sind, wobei die erste magnetische Führungsscheibe (25) dazu ausgebildet ist, das Permanentmagnetfeld in einem radialen Spaltbereich zwischen dem Rotor (10) und dem ersten geschlossenen Magnetkern (31A) zu konzentrieren, und die zweite magnetische Führungsscheibe (26) dazu ausgebildet ist, das Permanentmagnetfeld in einem radialen Spaltbereich zwischen dem Rotor (10) und dem zweiten geschlossenen Magnetkern (31B) zu konzentrieren.

9. Magnetische Lagervorrichtung nach einem der vorhergehenden Ansprüche, die ferner mindestens eine Axiallagerwicklung (41, 42; 43) umfasst, die azimutal um den Rotor (10) gewickelt ist, wobei die mindestens eine Axiallagerwicklung (41, 42; 43; 43A, 43B) so angeordnet ist, dass sie mit dem von dem mindestens einen Permanentmagneten (21, 22; 24) erzeugten Permanentmagnetfeld zusammenwirkt, um eine Axiallagerkraft zu erhalten, wenn die mindestens eine Axiallagerwicklung (41, 42; 43; 43A, 43B) mit Strom versorgt wird.

10. Magnetische Lagervorrichtung nach Anspruch 9, mit zwei Axiallagerwicklungen (41, 42), die auf axial gegenüberliegenden Seiten der mindestens einen Radiallagerwicklung (32; 32A, 32B) angeordnet sind.

11. Magnetische Lagervorrichtung nach Anspruch 9 oder 10, mit mindestens einer Axiallagerwicklung (43; 43A, 43B), die in einem radialen Spalt zwischen dem Rotor (10) und dem geschlossenen Magnetkern (31; 31A, 31B), insbesondere zwischen dem Rotor (10) und der mindestens einen Radiallagerwicklung (32; 32A, 32B), angeordnet ist.

12. Magnetische Lagervorrichtung nach einem der vorangehenden Ansprüche, ferner umfassend:
mindestens einen Radialverschiebungssensor (61) zur Erfassung von Radialverschiebungen des Rotors (10); und
eine Steuerung (70), die dazu ausgebildet ist, Signale von dem mindestens einen Radialverschiebungssensor (61) zu empfangen und Radialsteuersignale für die mindestens eine Radiallagerwicklung (32; 32A, 32B) zu erzeugen, um eine radiale Position des Rotors (10) zu beeinflussen.

13. Magnetische Lagervorrichtung nach Anspruch 12, ferner umfassend:
mindestens einen Axialverschiebungssensor (62) zur Erfassung von Axialverschiebungen des Rotors (10),
wobei die Steuerung (70) ferner dazu ausgebildet ist, Signale von dem mindestens einen axialen Verschiebungssensor (62) zu empfangen und Axialsteuersignale für mindestens eine Axiallagerwicklung (41, 42; 43; 43A, 43B) zu erzeugen, um eine axiale Position des Rotors (10) zu beeinflussen.

14. Magnetische Lagervorrichtung nach einem der vorhergehenden Ansprüche,
umfassend mindestens ein Paar Radiallagerwicklungen (32; 32A, 32B), die auf diametral gegenüberliegenden Seiten des Rotors (10) in toroidaler Anordnung auf einem gemeinsamen geschlossenen Magnetkern (31; 31A, 31B) angeordnet und antireihen- oder antiparallel geschaltet sind, und/oder
umfassend mindestens drei Radiallagerwicklungen (32; 32A, 32B), die auf einem gemeinsamen geschlossenen Magnetkern (31; 31A, 31B) in Ringform verteilt und in Stern- oder Dreieckform geschaltet sind.

## Revendications

1. Dispositif de palier magnétique comprenant:
un stator (30); et
un rotor (10) supporté par le stator (30) pour tourner autour d'un axe de rotation (R), le rotor (10) comprenant au moins un aimant permanent (21, 22; 24) qui est magnétisé le long de l'axe de rotation (R), et
le stator comprenant au moins un noyau magnétique fermé (31; 31A, 31B) qui entoure le rotor (10) et au moins un enroulement de palier radial (32; 32A, 32B) disposé sur le au moins un noyau magnétique fermé (31; 31A, 31B) dans une configuration toroïdale, chaque enroulement de palier radial (32; 32A, 32B) s'étendant autour d'un noyau magnétique fermé (31; 31A, 31B), chacune de ses spires passant à travers un trou central du noyau magnétique fermé respectif (31; 31A, 31B),
dans lequel l'au moins un enroulement de palier radial (32; 32A, 32B) est conçu pour interagir avec une composante radiale d'un champ magnétique permanent généré par l'au moins un aimant permanent (21, 22; 24) afin d'obtenir une force de palier radial lorsqu'un courant est fourni à l'au moins un enroulement de palier radial (32; 32A, 32B),
**caractérisé en ce que** l'au moins un noyau magnétique fermé (31; 31A, 31B) n'a pas de dents s'étendant vers l'intérieur.

2. Dispositif de palier magnétique selon la revendication 1, comprenant en outre un premier et un deuxième anneau de guidage magnétique (51, 52), chacun du premier et du deuxième anneau de guidage magnétique (51, 52) entourant le rotor (10), le premier anneau de guidage magnétique (51) étant disposé sur un premier côté axial de l'au moins un enroulement de palier radial (32; 32A, 32B), et le deuxième anneau de guidage magnétique (52) étant disposé sur un deuxième côté axial de l'au moins un enroulement de palier radial (32; 32A, 32B) opposé au premier côté axial, le premier anneau de guidage magnétique (51) étant conçu pour guider le champ magnétique permanent entre une première partie d'extrémité axiale de l'au moins un aimant permanent (21, 22; 24) et une première partie d'extrémité axiale du noyau magnétique fermé (31; 31A, 31B), et le deuxième anneau de guidage magnétique (52) étant conçu pour guider le champ magnétique permanent entre une deuxième partie d'extrémité axiale de l'au moins un aimant permanent (21, 22; 24) et une deuxième partie d'extrémité axiale du noyau magnétique fermé (31; 31A, 31B).

3. Dispositif de palier magnétique selon l'une quelconque des revendications précédentes, dans lequel le rotor (10) comprend au moins un disque de guidage magnétique (23; 25, 26) disposé axialement à côté de l'au moins un aimant permanent (21, 22; 24), l'au moins un disque de guidage magnétique (23; 25, 26) étant conçu pour concentrer et dévier un flux magnétique causé par le champ magnétique permanent de la direction axiale vers la direction radiale et pour concentrer le champ magnétique permanent dans une région d'espace radial entre le rotor (10) et le noyau magnétique fermé (31; 31A, 31B).

4. Dispositif de palier magnétique selon l'une quelconque des revendications précédentes, dans lequel le rotor comprend un premier et un deuxième aimant permanent (21, 22) qui sont magnétisés le long de l'axe de rotation (R) avec des polarités opposées.

5. Dispositif de palier magnétique selon la revendication 4, dans lequel le rotor comprend un disque de guidage magnétique (23) disposé axialement entre le premier et le deuxième aimant permanent (21, 22), le disque de guidage magnétique (23) étant conçu pour concentrer le champ magnétique permanent dans une région d'espace radial entre le rotor (10) et le noyau magnétique fermé (31; 31A, 31B).

6. Dispositif de palier magnétique selon l'une des revendications 1 à 3,
dans lequel le stator (30) comprend un premier et un second noyau magnétique fermé (31A, 31B) qui entourent le rotor (10) à différents emplacements axiaux le long de l'axe de rotation (R),
dans lequel le stator (30) comprend au moins un premier enroulement de palier radial (32A) qui est disposé dans une configuration toroïdale autour du premier noyau magnétique fermé (31A) et au moins un deuxième enroulement de palier radial (32B) qui est disposé dans une configuration toroïdale autour du deuxième noyau magnétique fermé (31B),
dans lequel les premier et second enroulements de palier radial (32A, 32B) sont disposés pour interagir avec le champ magnétique permanent généré par l'au moins un aimant permanent (24) afin d'obtenir une force de palier radial lorsqu'un courant est fourni aux premier et second enroulements de palier radial (32A, 32B).

7. Dispositif de palier magnétique selon la revendication 6, dans lequel l'au moins un aimant permanent (24) a une seule polarité le long de l'axe de rotation (R).

8. Dispositif de palier magnétique selon la revendication 7, dans lequel le rotor comprend un premier et un second disque de guidage magnétique (25, 26) disposés aux extrémités axialement opposées de l'au moins un aimant permanent (24), le premier disque de guidage magnétique (25) étant conçu pour concentrer le champ magnétique permanent dans une région d'espace radial entre le rotor (10) et le premier noyau magnétique fermé (31A), et le second disque de guidage magnétique (26) étant conçu pour concentrer le champ magnétique permanent dans une région d'espace radial entre le rotor (10) et le second noyau magnétique fermé (31B).

9. Dispositif de palier magnétique selon l'une quelconque des revendications précédentes, comprenant en outre au moins un enroulement de palier axial (41, 42; 43) enroulé azimutalement autour du rotor (10), l'au moins un enroulement de palier axial (41, 42; 43; 43A, 43B) étant disposé pour interagir avec le champ magnétique permanent généré par l'au moins un aimant permanent (21, 22; 24) afin d'obtenir une force de palier axial lorsqu'un courant est fourni à l'au moins un enroulement de palier axial (41, 42; 43; 43A, 43B).

10. Dispositif de palier magnétique selon la revendication 9, comprenant deux enroulements de palier axial (41, 42) disposés sur des côtés axialement opposés de l'au moins un enroulement de palier radial (32; 32A, 32B).

11. Dispositif de palier magnétique selon la revendication 9 ou 10, comprenant au moins un enroulement de palier axial (43; 43A, 43B) qui est disposé dans un espace radial entre le rotor (10) et le noyau magnétique fermé (31; 31A, 31B), en particulier, entre le rotor (10) et l'au moins un enroulement de palier radial (32; 32A, 32B).

12. Dispositif de palier magnétique selon l'une quelconque des revendications précédentes, comprenant en outre:
au moins un capteur de déplacement radial (61) pour détecter des déplacements radiaux du rotor (10); et
un système de commande (70) configuré pour recevoir des signaux de l'au moins un capteur de déplacement radial (61) et pour générer des signaux de commande radiale pour l'au moins un enroulement de palier radial (32; 32A, 32B) de manière à manipuler une position radiale du rotor (10).

13. Dispositif de palier magnétique selon la revendication 12, comprenant en outre:
au moins un capteur de déplacement axial (62) pour détecter des déplacements axiaux du rotor (10),
dans lequel le système de commande (70) est en outre configuré pour recevoir des signaux de l'au moins un capteur de déplacement axial (62) et pour générer des signaux de commande axiale pour au moins un enroulement de palier axial (41, 42; 43; 43A, 43B) de manière à manipuler une position axiale du rotor (10).

14. Dispositif de palier magnétique selon l'une quelconque des revendications précédentes,
comprenant au moins une paire d'enroulements de palier radiaux (32; 32A, 32B) disposés sur des côtés diamétralement opposés du rotor (10) dans une configuration toroïdale sur un noyau magnétique fermé commun (31; 31A, 31B) et connectés dans une configuration anti-série ou anti-parallèle, et/ou
comprenant au moins trois enroulements de palier radiaux (32; 32A, 32B) répartis sur un noyau magnétique fermé commun (31; 31A, 31B) dans une configuration toroïdale et connectés en étoile ou en triangle.
